# EUROPEAN PATENT APPLICATION

(11) **EP 3 680 879 A1**
(43) Date of publication of application: **15.07.2020**
(21) Application number: 18854927.3
(22) Date of filing: 05.09.2018
(51) Int. Cl.: G09B 21/00

(54) **DISTRIBUTED VIBRATION TRIGGERING METHOD, DEVICE, AND AUXILIARY READING APPARATUS**

(30) Priority: 05.09.2017 CN 201710790887
(71) Applicant: ZTE Corporation, Shenzhen, Guangdong 518057 (CN)
(72) Inventor: ZHU, Tao, Shenzhen Guangdong 518057 (CN)
(74) Representative: Hervouet-Malbec, Sylvie
(86) International application number: PCT/CN2018/104181
(87) International publication number: WO 2019/047854

(57) **Abstract**

The present invention provides a distributed vibration triggering method, a distributed vibration triggering device and an assistive reading device. The distributed vibration triggering method includes: receiving software instructions which trigger independent vibration units to vibrate, wherein a plurality of excited directional high-frequency vibration sources are arranged in an array according to braille characters and integrated on a substrate in each vibration unit; and performing operation processing on the software instructions to generate control signals for the plurality of excited directional high-frequency vibration sources, wherein the control signals are used to control the plurality of excited directional high-frequency vibration sources to independently vibrate with preset intensities and frequencies.

## Description

### TECHNICLA FIELD

The present invention relates to, but is not limited to, the field of communications.

### BACKGROUND

When using a mobile phone, a visually impaired user cannot acquire information displayed on a screen of the mobile phone. At present, smart phone systems have an auxiliary function of voice broadcasting, but such function is not good for personal privacy. In addition, if the visually impaired user also has a hearing impairment, the auxiliary function is of no use.

No technical solution has been proposed for solving the problem that the auxiliary function of voice broadcasting of the mobile phone is of no use to the users having visual and hearing impairments.

### SUMMARY

According to one embodiment of the present invention, an assistive reading device is provided, and includes a distributed vibration module and a vibration control module. The distributed vibration module includes a plurality of independent vibration units, and in each vibration unit, a plurality of excited directional high-frequency vibration sources are arranged in an array according to braille characters and integrated on a substrate. The vibration control module is configured to receive software instructions which trigger the independent vibration units to vibrate, perform operation processing on the software instructions, and generate control signals for the plurality of excited directional high-frequency vibration sources, and is connected to a control signal transmission line of each excited directional high-frequency vibration source through a control signal output bus.

According to another embodiment of the present invention, a distributed vibration triggering method is further provided, and includes: receiving software instructions which trigger independent vibration units to vibrate, where a plurality of excited directional high-frequency vibration sources are arranged in an array according to braille characters and integrated on a substrate in each vibration unit; and performing operation processing on the software instructions to generate control signals for the plurality of excited directional high-frequency vibration sources, where the control signals are used to control the plurality of excited directional high-frequency vibration sources to independently vibrate with preset intensities and frequencies.

According to another embodiment of the present invention, a distributed vibration triggering device is further provided, and includes: a receiving module configured to receive software instructions which trigger independent vibration units to vibrate, where a plurality of excited directional high-frequency vibration sources are arranged in an array according to braille characters and integrated on a substrate in each vibration unit; and an operation module configured to perform operation processing on the software instructions to generate control signals for the plurality of excited directional high-frequency vibration sources, where the control signals are used to control the plurality of excited directional high-frequency vibration sources to independently vibrate with preset intensities and frequencies.

According to yet another embodiment of the present invention, a storage medium is further provided and has computer programs stored thereon, and when the computer programs are executed by a processor, the distributed vibration triggering method according to the present invention is performed by the processor.

### BRIEF DESCRIPTION OF THE DRAWINGS

The drawings described herein are used for further understanding of the present invention and are incorporated in and constitute a part of the present invention. The exemplary embodiments and their descriptions of the present invention are intended to explain the present invention but do not make improper limitation to the present invention. In the drawings:
Fig. 1 is a block diagram of a hardware structure of a mobile terminal having a distributed vibration triggering function according to an embodiment of the present invention;
Fig. 2 is a schematic diagram of a vibration unit according to an embodiment of the present invention;
Fig. 3 is a schematic diagram of configuration of an excited directional high-frequency vibration source according to an embodiment of the present invention;
Fig. 4 is a schematic diagram of a distributed vibration module according to an embodiment of the present invention;
Fig. 5 is a schematic diagram of a vibration control module according to an embodiment of the present invention;
Fig. 6 is a schematic diagram of a damping filling medium according to an embodiment of the present invention;
Fig. 7 is a flowchart illustrating a distributed vibration triggering method according to an embodiment of the present invention; and
Fig. 8 is a block diagram of a distributed vibration triggering device according to an embodiment of the present invention.

### DETAILED DESCRIPTION

The present invention will be described in detail below with reference to the accompanying drawings in conjunction with embodiments. It should be noted that the embodiments and features in the embodiments of the present invention may be combined with each other if no conflict incurs.

It should be noted that the terms "first", "second" and the like in the description, claims and drawings of the present invention are used for distinguishing between similar objects, but not necessarily for describing a particular order or chronological order.

The distributed vibration triggering method according to the embodiments of the present invention may be performed in a mobile terminal, a computer terminal or a similar operation device.

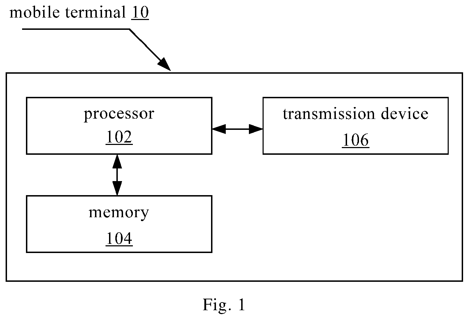

Taking performing in a mobile terminal as an example, Fig. 1 is a block diagram of a hardware structure of a mobile terminal having a distributed vibration triggering function according to an embodiment of the present invention.

As shown in Fig. 1, a mobile terminal 10 may include one or more processors 102 (only one processor is shown), a memory 104 for storing data, and a transmission device 106 for performing communication functions. It should be understood by those of ordinary skill in the art that the structure shown in Fig. 1 is merely for illustration but is not intended to limit the structure of the mobile terminal. For example, the mobile terminal 10 may include more or fewer components than those shown in Fig. 1, or have a configuration different from that shown in Fig. 1.

The processor 102 may include, but is not limited to, a microprocessor, a microcontroller, a programmable logic device and other processing devices.

The memory 104 may store software programs and modules of application software, such as program instructions/modules corresponding to the distributed vibration triggering method according to the embodiments of the present invention. The processor 102 may execute various functional applications and data processing by running the software programs and modules stored in the memory 104, that is, implement the distributed vibration triggering method according to the embodiments of the present invention. The memory 104 may include a high-speed random access memory and/or a non-volatile memory. In some embodiments, the memories 104 may include memories remotely arranged relative to the processors 102, and the remote memories may be connected to the mobile terminals 10 via networks. The network may include, but is not limited to, the Internet, an intranet, a local area network, a mobile communications network, and combinations thereof.

The transmission device 106 is configured to receive or transmit data via a network which may include a wireless network provided by a communication provider of the mobile terminal 10. In one embodiment, the transmission device 106 includes a Network Interface Controller (NIC) that may be connected to other network devices through a base station so as to communicate with the Internet. In one embodiment, the transmission device 106 may be a Radio Frequency (RF) module configured to wirelessly communicate with the Internet.

According to one embodiment of the present invention, an assistive reading device is provided, and includes a distributed vibration module and a vibration control module. The distributed vibration module includes a plurality of independent vibration units, and in each vibration unit, a plurality of excited directional high-frequency vibration sources are arranged in an array according to braille characters and integrated on a substrate. The vibration control module is configured to receive software instructions which trigger the independent vibration units to vibrate, perform operation processing on the software instructions, and generate control signals for the plurality of excited directional high-frequency vibration sources, and is connected to a control signal transmission line of each excited directional high-frequency vibration source through a control signal output bus.

The assistive reading device according to the embodiment of the present invention is light, small and thin, and can be disposed on an inner side, a back side or other suitable positions of a display screen of an intelligent device. When the intelligent device enters an assistive reading mode, directional vibration can be generated on a surface of the display screen or a shell to simulate raised touch for the convenience of visually impaired users.

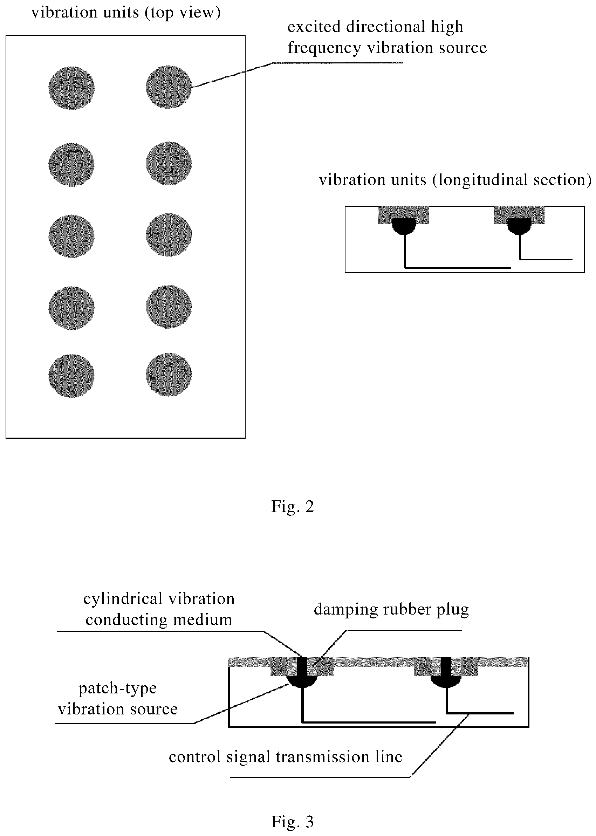

Fig. 2 is a schematic diagram of a vibration unit according to an embodiment of the present invention.

As shown in Fig. 2, braille is composed of raised dots arranged in an array, and character sets of different standards are different in dot numbers. In the embodiment illustrated in Fig. 2, it is assumed that one braille character is composed of 10 coordinate point positions. The distributed vibration module may include a plurality of independent vibration units, and in each vibration unit, a plurality of excited directional high-frequency vibration sources are arranged in an array according to braille characters and integrated on a substrate.

The excited directional high-frequency vibration source may include a patch-type vibration source and a cylindrical vibration conducting medium. The patch-type vibration source may generate vibrations with specific intensities and frequencies according to different voltage or current excitation signals, and the cylindrical vibration conducting medium may be integrated between the patch-type vibration source and a surface of the vibration unit, so as to function as a vibration wave propagation waveguide.

The excited directional high-frequency vibration source may further include a damping rubber plug which may be used as an auxiliary part of the cylindrical vibration conducting medium to release assembly stress between the cylindrical vibration conducting medium and the substrate, and restrict vibration waves to vertical and upward propagation along the cylindrical vibration conducting medium.

A damping filling medium may be disposed among the plurality of excited directional high-frequency vibration sources for eliminating lateral vibration interference.

Fig. 3 is a schematic diagram of configuration of an excited directional high-frequency vibration source according to an embodiment of the present invention.

As shown in Fig. 3, each excited directional high-frequency vibration source may include a patch-type vibration source, a cylindrical vibration conducting medium, and a damping rubber plug. The patch-type vibration source is easy for scale assembly, and may generate vibrations with specific intensities and frequencies according to different current or voltage excitation signals. In order to generate vibrations in a specified coordinate area as much as possible, the cylindrical vibration conducting medium is integrated between the patch-type vibration source and a surface of the vibration unit. Serving as a vibration wave propagation waveguide, the cylindrical medium may attenuate lateral propagation of vibration waves and enhance vibration at an end face of the cylindrical medium. The damping rubber plug may be used as an auxiliary part of the cylindrical vibration conducting medium to release assembly stress between the cylindrical vibration conducting medium and a substrate on the one hand, and, on the other hand, further restrict the vibration waves to vertical propagation along the cylindrical vibration conducting medium so as to prevent lateral leakage.

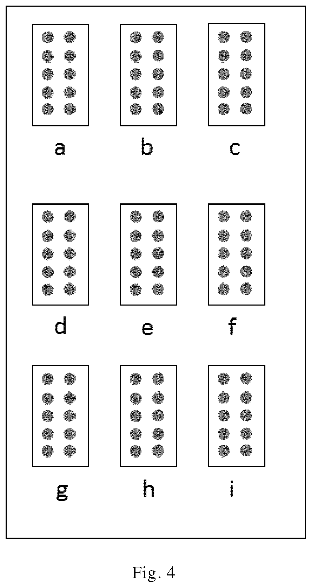

Fig. 4 is a schematic diagram of a distributed vibration module according to an embodiment of the present invention.

As shown in Fig. 4, a plurality of independent vibration units form a distributed vibration module according to actual needs. In the embodiment illustrated in Fig. 4, the distributed vibration module includes 9 independent vibration units numbered from a to i, and may simultaneously simulate 9 braille characters at a time.

The vibration control module is configured to receive software instructions. After a series of operation processing, the vibration control module generates a control signal for each excited directional high-frequency vibration source and controls each vibration source to independently vibrate with certain intensity and frequency.

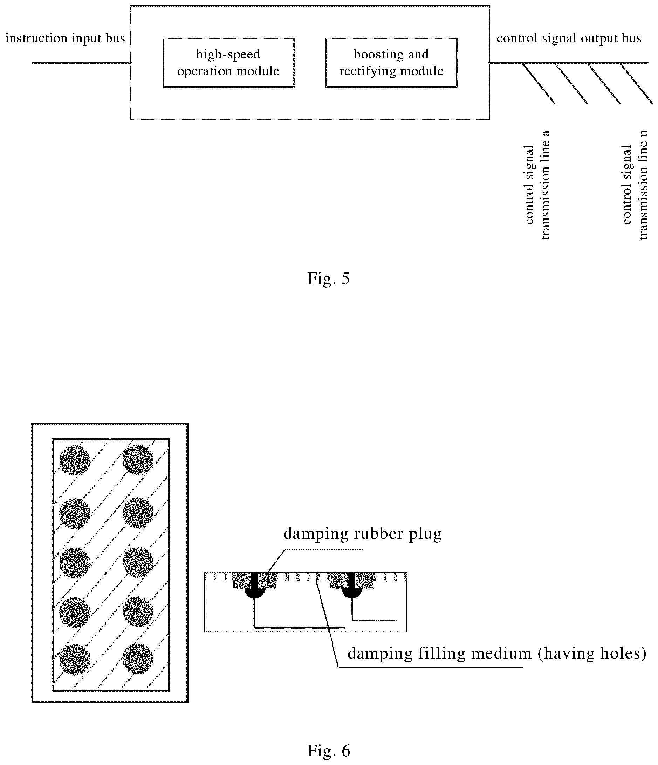

Fig. 5 is a schematic diagram of a vibration control module according to an embodiment of the present invention.

As shown in Fig. 5, the vibration control module may include an instruction input bus, a control signal output bus, a high-speed operation module, and a boosting and rectifying module.

The instruction input bus couples an intelligent device to an input side of the vibration control module. Character information to be converted and represented may be transmitted to the high-speed operation module through the instruction input bus. The high-speed operation module may store braille character sets of a plurality of standards for selection of a specific standard on the intelligent device side. Supposing that the vibration control module receives an instruction that the braille character needs to be represented in a form of six dots, the operation module establishes a corresponding relation between the character information to be converted and represented and a braille character set represented in the form of six dots, so as to obtain an excitation signal set of corresponding vibration points. Excitation signals are further processed by the boosting and rectifying module to become excitation signals with proper current and/or voltage. The processed excitation signals are transmitted to the control signal transmission lines of the excited directional high-frequency vibration sources through the control signal output bus, so as to control the excited directional high-frequency vibration sources to generate vibrations.

Fig. 6 is a schematic diagram of a damping filling medium according to an embodiment of the present invention.

As shown in Fig. 6, vibration dampers may include damping rubber plugs in the excited directional high-frequency vibration sources and a damping filling medium among the high-frequency vibration sources. The damping filling medium may fill gaps among the high-frequency vibration sources, so as to prevent mutual influence between vibrations of the vibration sources. For further enhancing effects and reducing weight, a large number of holes may be arranged. In addition, a filling medium having a large number of holes may be provided among the vibration units, so that the whole system can eliminate lateral vibration interference to the greatest extent, enhance recognition of vertical vibration, and eliminate vibration interference to other parts in the electronic device where the system is disposed.

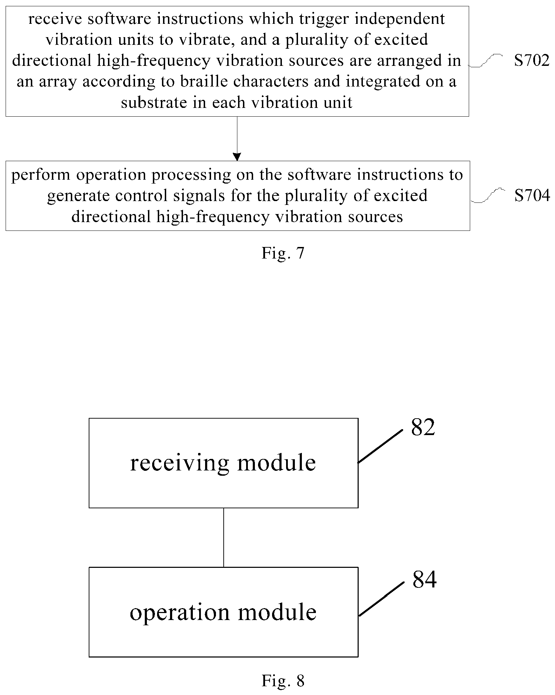

Fig. 7 is a flowchart illustrating a distributed vibration triggering method according to an embodiment of the present invention.

As shown in Fig. 7, the distributed vibration triggering method according to an embodiment of the present invention may include steps S702 and S704.

In step S702, software instructions, which trigger independent vibration units to vibrate, are received, and in each vibration unit, a plurality of excited directional high-frequency vibration sources are arranged in an array according to braille characters and integrated on a substrate.

In step S704, the software instructions are subject to operation processing to generate control signals for the plurality of excited directional high-frequency vibration sources, and the control signals are used to control the plurality of excited directional high-frequency vibration sources to independently vibrate with preset intensities and frequencies.

According to the embodiment of the present invention, an excitation signal set of vibration points corresponding to the software instructions may be obtained according to a corresponding relation established between character information to be converted and represented and a braille character set.

According to the embodiment of the present invention, after obtaining the excitation signal set of vibration points corresponding to the software instructions, excitation signals may be boosted and rectified, and the processed excitation signals are transmitted to control signal transmission lines of the excited directional high-frequency vibration sources through a control signal output bus, so as to control the excited directional high-frequency vibration sources to generate vibrations.

The distributed vibration triggering method according to the embodiment of the present invention may further include: receiving a setting instruction for setting vibration intensities; and setting vibration intensities for the plurality of excited directional high-frequency vibration sources according to the setting instruction.

In the actual use, a vibration intensity setting function may be provided on the intelligent device side. Moreover, integration levels, including integration level of vibration sources within a single vibration unit, and integration level of the vibration sources per unit area, may be further improved to increase a number of simulated and represented characters.

Fig. 8 is a block diagram of a distributed vibration triggering device according to an embodiment of the present invention.

As shown in Fig. 8, the distributed vibration triggering device according to an embodiment of the present invention may include a receiving module 82 and an operation module 84.

The receiving module 82 is configured to receive software instructions which trigger independent vibration units to vibrate, and in each vibration unit, a plurality of excited directional high-frequency vibration sources are arranged in an array according to braille characters and integrated on a substrate.

The operation module 84 is configured to perform operation processing on the software instructions to generate control signals for the plurality of excited directional high-frequency vibration sources, and the control signals are used to control the plurality of excited directional high-frequency vibration sources to independently vibrate with preset intensities and frequencies.

According to the embodiment of the present invention, the operation module 84 may be further configured to obtain an excitation signal set of vibration points corresponding to the software instructions according to a corresponding relation established between character information to be converted and represented and a braille character set.

The distributed vibration triggering device according to the embodiment of the present invention may further include a boosting and rectifying module and a control module.

The boosting and rectifying module is configured to boost and rectify excitation signals.

The control module is configured to transmit the processed excitation signals to control signal transmission lines of the excited directional high-frequency vibration sources through a control signal output bus, so as to control the excited directional high-frequency vibration sources to generate vibrations.

The distributed vibration triggering device according to the embodiment of the present invention may further include an instruction receiving module and a setting module.

The instruction receiving module is configured to receive a setting instruction for setting vibration intensities.

The setting module is configured to set vibration intensities for the plurality of excited directional high-frequency vibration sources according to the setting instruction.

It should be noted that each of the above modules may be implemented by software or hardware, and all the modules may be located in a same processor; or the modules may be randomly combined and located in different processors.

An embodiment of the present invention further provides a storage medium with computer programs stored thereon, and when the computer programs are processed and executed by a processor the distributed vibration triggering method according to the embodiments of the present invention is performed by the processor.

The storage media may include, but are not limited to, various media capable of storing program codes, such as USB flash drives, Read-Only Memories (ROMs), Random Access Memories (RAMs), mobile hard disks, magnetic disks, and optical discs.

It should be understood by those skilled in the art that all the modules or steps of the present invention described above may be implemented by using general purpose computing devices, and may be collectively arranged in a single computing device or be distributed in a network composed of two computing devices. Furthermore, all the modules or steps may be implemented by program codes executable by a computing device, and therefore, may be stored in a memory and executed by a computing device, and in some cases, the steps illustrated or described may be performed in an order different from that described herein; or each of the modules and steps may be manufactured to be an individual integrated circuit module; or two of the modules or steps may be implemented by being manufactured to be a single integrated circuit module. Thus, the present invention is not limited to any specific combination of hardware and software.

The above embodiments are merely preferred embodiments of the present invention and are not intended to limit the present invention. To those skilled in the art, various modifications and changes may be made to the present invention. But any modification, equivalent replacement and improvement made within the principle of the present invention should be included in the protection scope of the present invention.

## Claims

1. An assistive reading device, comprising a distributed vibration module and a vibration control module,
the distributed vibration module comprises a plurality of independent vibration units, wherein in each vibration unit, a plurality of excited directional high-frequency vibration sources are arranged in an array according to braille characters and integrated on a substrate, and
the vibration control module is configured to receive software instructions which trigger the independent vibration units to vibrate, perform operation processing on the software instructions, and generate control signals for the plurality of excited directional high-frequency vibration sources,
wherein the vibration control module is connected to a control signal transmission line of each excited directional high-frequency vibration source through a control signal output bus.

2. The assistive reading device of claim 1, wherein each of the plurality of excited directional high-frequency vibration sources comprises a patch-type vibration source and a cylindrical vibration conducting medium,
the patch-type vibration source generates vibrations with specific intensities and frequencies according to different voltage or current excitation signals, and
the cylindrical vibration conducting medium is integrated between the patch-type vibration source and a surface of the vibration unit, so as to function as a vibration wave propagation waveguide.

3. The assistive reading device of claim 2, wherein each of the plurality of excited directional high-frequency vibration sources comprises a damping rubber plug,
the damping rubber plug is used as an auxiliary part of the cylindrical vibration conducting medium to release assembly stress between the cylindrical vibration conducting medium and the substrate, and restrict vibration waves to vertical and upward propagation along the cylindrical vibration conducting medium.

4. The assistive reading device of claim 3, wherein
a damping filling medium is disposed among the plurality of excited directional high-frequency vibration sources for eliminating lateral vibration interference.

5. The assistive reading device of claim 1, wherein the assistive reading device is applied to a mobile terminal.

6. A distributed vibration triggering method, comprising:
receiving software instructions which trigger independent vibration units to vibrate, wherein in each vibration unit, a plurality of excited directional high-frequency vibration sources are arranged in an array according to braille characters and integrated on a substrate; and
performing operation processing on the software instructions to generate control signals for the plurality of excited directional high-frequency vibration sources,
wherein the control signals are used to control the plurality of excited directional high-frequency vibration sources to independently vibrate with preset intensities and frequencies.

7. The distributed vibration triggering method of claim 6, wherein the step of performing operation processing on the software instructions to generate control signals for the plurality of excited directional high-frequency vibration sources comprises:
obtaining an excitation signal set of vibration points corresponding to the software instructions according to a corresponding relation established between character information to be converted and represented and a braille character set.

8. The distributed vibration triggering method of claim 7, further comprising:
boosting and rectifying excitation signals; and
transmitting the processed excitation signals to control signal transmission lines of the excited directional high-frequency vibration sources through a control signal output bus, so as to control the plurality of excited directional high-frequency vibration sources to generate vibrations.

9. The distributed vibration triggering method of any one of claims 6 to 8, further comprising:
receiving a setting instruction for setting vibration intensities; and
setting vibration intensities for the plurality of excited directional high-frequency vibration sources according to the setting instruction.

10. A distributed vibration triggering device, comprising:
a receiving module configured to receive software instructions which trigger independent vibration units to vibrate, wherein in each vibration unit, a plurality of excited directional high-frequency vibration sources are arranged in an array according to braille characters and integrated on a substrate; and
an operation module configured to perform operation processing on the software instructions to generate control signals for the plurality of excited directional high-frequency vibration sources,
wherein the control signals are used to control the plurality of excited directional high-frequency vibration sources to independently vibrate with preset intensities and frequencies.

11. The distributed vibration triggering device of claim 10, wherein the operation module is further configured to:
obtain an excitation signal set of vibration points corresponding to the software instructions according to a corresponding relation established between character information to be converted and represented and a braille character set.

12. The distributed vibration triggering device of claim 11, further comprising:
a boosting and rectifying module configured to boost and rectify excitation signals; and
a control module configured to transmit the processed excitation signals to control signal transmission lines of the excited directional high-frequency vibration sources through a control signal output bus, so as to control the plurality of the excited directional high-frequency vibration sources to generate vibrations.

13. The distributed vibration triggering device of any one of claims 10 to 12, further comprising:
an instruction receiving module configured to receive a setting instruction for setting vibration intensities; and
a setting module configured to set vibration intensities for the plurality of excited directional high-frequency vibration sources according to the setting instruction.

14. A storage medium, comprising computer programs stored thereon, when the computer programs are executed by a processor, the processor performs the distributed vibration triggering method of any one of claims 6 to 9.
